# EUROPÄISCHE PATENTSCHRIFT

(11) **EP 3 758 573 B1**
(45) Veröffentlichungstag und Bekanntmachung des Hinweises auf die Patenterteilung: **25.12.2024**
(21) Anmeldenummer: 19702901.0
(22) Anmeldetag: 01.02.2019
(51) Int. Cl.: A47L 13/50, B01D 29/27

(54) **FILTER**
FILTER
FILTRE

(30) Priorität: 28.02.2018 DE 102018104535
(43) Veröffentlichungstag der Anmeldung: 06.01.2021
(73) Patentinhaber: Spies, Oliver, 10119 Berlin (DE)
(72) Erfinder: Spies, Oliver, 10119 Berlin (DE)
(74) Vertreter: Grättinger Möhring von Poschinger Patentanwälte Partnerschaft mbB
(86) Internationale Anmeldenummer: PCT/EP2019/052496
(87) Internationale Veröffentlichungsnummer: WO 2019/166179

(56) Entgegenhaltungen:
- EP-A1- 2 389 850
- DE-A1- 10 065 373
- DE-U1- 29 722 847
- US-A- 2 290 217
- US-A- 244 877
- US-A- 3 562 841
- US-A1- 2012 241 389
- US-A1- 2014 263 104
- US-A1- 2017 105 569

## Beschreibung

Die vorliegende Erfindung betrifft einen Filter zur Filterung von Schmutzwasser mit einer bei bestimmungsgemäßem Gebrauch des Filters oberseitig vorgesehenen Einlassöffnung für das Schmutzwasser und einem Filterelement, durch welches das durch den Filter hindurchlaufende Wasser gefiltert wird.

Viele der heutzutage vertriebenen Textilien und Bekleidungsstücke, insbesondere Outdoorbekleidung oder sonstige aus synthetischen Fasern bestehende Funktionsbekleidung, bestehen zu nicht unwesentlichen Anteilen aus Kunststofffasern. Diese Textilien haben den Nachteil, dass insbesondere bei ihrer Wäsche Kunststofffasern bzw. Kunststofffaserbruchstücke ausgewaschen bzw. herausgelöst werden, die dann mit dem Abwasser in die Umwelt gelangen. Da es sich bei solchen Kunststofffasern in aller Regel um sehr kleine und kurze Fasern bzw. Faserbruchstücke handelt, sind herkömmliche Abwasserfilter von Waschmaschinen oder sonstige bisher im Haushalt eingesetzte Filter zur Filterung von Schmutzwasser nicht in der Lage, besagte Fasern in nennenswertem Umfang zurückzuhalten. Kläranlagen können zwar einen gewissen Anteil der im Abwasser befindlichen Kunststofffasern zurückhalten, lassen jedoch nach wie vor einen Großteil solcher Fasern passieren, die damit in nicht unerheblichem Umfang zur Verschmutzung der Flüsse und Weltmeere beitragen, wo sie durch die Nahrungsaufnahme von Tieren letztlich wieder in der Nahrungskette landen. Selbstverständlich ist es wünschenswert, dass Waschmaschinen, Kläranlagen, etc. mit geeigneten Mikroplastikfiltern versehen werden, was jedoch offenbar noch nicht flächendeckend möglich ist.

In diesem Zusammenhang ist aus der WO 2017/121862 A1 bereits ein im Rahmen der Wäsche von Kunststofffasern enthaltenden Textilien zu benutzender Wäschebeutel bekannt, welcher als Rückhaltemittel für aus den Textilien ausgewaschene Kunststoffasern bzw. Faserbruchstücke dient und so zum Umweltschutz beitragen kann.

Es ist jedoch davon auszugehen, dass sich auch bei der Benutzung von Kunststofffasern enthaltenden Textilien Fasern bzw. Faserbruchstücke aus diesen herauslösen, so dass auch aus diesem Grund extrem viele Kunststoffpartikel und -fasern in der Umgebungsluft umherschwirren, die sich auf jeder Art von Oberflächen absetzen, wo sie beim Putzen weggewischt und schließlich im Abwasser entsorgt werden. Weitere Quellen für die Belastung der Umwelt sind durch Reifen- und Sohlenabrieb freigesetzte Kunststoffpartikel, die ebenfalls mit Schmutzwasser in die Umwelt gelangen können.

Aus der US 244 877 A ist bereits ein mit einem Ausguss versehener Eimer bekannt, an welchem ein Filter befestigbar bzw. einhängbar ist. Der Filter weist hierfür eine Haltestruktur auf, mit welcher er am oberen Rand eines in seinen Abmessungen hierzu korrespondierenden Eimers im Bereich des Ausgusses derart befestigbar ist, dass der Filter außen am Eimer hängend als Ausgießfilter zum Filtern des beim Kippen des Eimers aus dem Eimer auslaufenden Schmutzwassers dienen kann. Dieser Stand der Technik lässt jedoch noch Raum für Verbesserungen.

Vor diesem Hintergrund soll mit der vorliegenden Erfindung ein weiteres möglichst praktisch und universell einsetzbares Hilfsmittel zum Umweltschutz bereitgestellt werden.

Hierzu betrifft die vorliegende Erfindung einen Filter gemäß Anspruch 1.

Dadurch dass der erfindungsgemäße Filter sehr einfach aufgebaut ist, und eine Haltestruktur aufweist, mit welcher er an einem in seinen Abmessungen zu dem Filter korrespondierenden Eimer befestigbar bzw. abstützbar ist, erweist er sich als ein besonders einfach - insbesondere im Haushalt - zu benutzendes Hilfsmittel, bei dem das verschmutzte Wasser beim (durch Schwerkraft erfolgenden) Durchgang durch das in dem Filter enthaltene Filterelement gefiltert wird.

Die sich im Filter sammelnden Partikel können nach dessen Benutzung einfach entnommen werden und anschließend einer fachgerechten Entsorgung zugeführt werden.

Erfindungsgemäß ist ferner vorgesehen, dass die Haltestruktur des Filters durch wenigstens ein (flexibles) Befestigungsband gebildet wird, mit welchem der Filter im Bereich des oberen Rands des Eimers befestigbar ist, insbesondere indem das wenigstens eine Befestigungsband am oberen Rand des Eimers um diesen herumgeführt und dort geeignet fixiert wird. Ein derartiger Filter mit wenigstens einem (flexiblen, ggfs. auch elastisch ausführbaren) Befestigungsband als Haltestruktur ist besonders einfach herstellbar und auf einfache Art und Weise am Eimer befestigbar. Vorteilhaft können dabei zwei (z.B. an verschiedenen Seiten des eigentlichen Filters ansetzende) Befestigungsbänder vorgesehen sein, die zur Befestigung des Filters am oberen Rand des Eimers im Bereich ihrer freien Enden auf geeignete Weise miteinander verbindbar sind.

Weiterhin kann bevorzugt vorgesehen sein, dass das wenigstens eine Befestigungsband einen Klettverschluss aufweist. Bei Verwendung zweier (links- und rechtsseitig um den oberen Eimmerrand herumführbarer) Befestigungsbänder kann dabei je ein Teil des Klettverschlusses an einem der beiden Befestigungsbänder vorgesehen sein.

Von besonderem Vorteil ist ferner, wenn das wenigstens eine Befestigungsband und/oder der Klettverschluss derart angeordnet und/oder bemessen sind, dass der Filter innerhalb vorgegebener Grenzen zur Befestigung an verschieden großen Eimern (d.h. z.B. an Eimern mit unterschiedlich großem Umfang im Bereich ihres oberen Rands) und/oder an Eimern mit unterschiedlicher Querschnittsgeometrie (z.B. ovalen oder rechteckigen Eimern) geeignet ist.

Der erfindungsgemäße Filter weist ferner einen mit der Einlassöffnung für das zu filternde Wasser versehenen Filtersack auf. Diese Filtergestaltung eignet sich in besonderer Weise für Filter, die wie vorstehend beschrieben mittels eines als Haltestruktur dienenden Befestigungsbands am oberen Rand des Eimers befestigbar sind.

Ein solcher Filtersack kann vorteilhaft aus zwei randseitig miteinander verbundenen, insbesondere unter Zuhilfenahme von Verstärkungsbändern miteinander vernähten Lagen (eines beliebigen, ggfs. selbst mehrlagigen Materials) hergestellt sein, von denen wenigstens eine erste Lage zumindest bereichsweise als Filterelement fungiert.

Weiterhin ist, wie dies weiter unten anhand eines Ausführungsbeispiels der Erfindung noch näher erläutert wird, von Vorteil, dass der erfindungsgemäße Filtersack im Bereich der Einlassöffnung auf zwei gegenüberliegenden Seiten einen V-förmigen oder V-förmig aufspreizbaren Einschnitt aufweist, in welchen der Rand des Eimers bei bestimmungsgemäßer Befestigung des Filters an einem Eimer eindringen kann. Der in diesem Fall unterhalb des Eimerrands liegende Randabschnitt des Filtersacks kann dann bei bestimmungsgemäßer Befestigung des Filters eng an der Außenfläche des Eimers anliegen, während ein gegenüberliegender Randabschnitt des Filtersacks den Eimerrand überragt, so dass das im Eimer befindliche Schmutzwasser beim Kippen des Eimers verlustfrei durch die Einlassöffnung in den Filtersack eindringen und diesen unter Schwerkraftwirkung gefiltert wieder verlassen kann. Die im Filtersack zurückgehaltenen Schmutzpartikel einschließlich Mikroplastikverunreinigungen können anschließend aus dem Filtersack entnommen und fachgerecht entsorgt werden.

Alle Randbereiche des Filtersacks können vorteilhaft mit Verstärkungsbändern verstärkt sein.

Als besonders zweckmäßig erweist es sich bei einem Filter mit Filtersack und V-förmigen (bzw. V-förmig aufspreizbaren) Einschnitten im Bereich der Einlassöffnung, wenn zwei Befestigungsbänder vorgesehen sind, von denen jedes in einen ersten und zweiten Befestigungsbandabschnitt verzweigt ist, wobei die zwei Befestigungsbandabschnitte jedes Befestigungsbands an unterschiedlichen Schenkeln des V-förmigen Einschnitts des Filtersacks ansetzten. Som kann mit den Befestigungsbändern dafür Sorge getragen werden, dass sowohl der unterhalb des Eimerrands dem Eimer außenseitig anliegende Randabschnitt des Filtersacks als auch der über den Eimerrand nach oben hinausstehende Randabschnitt des Filtersacks beidseits gut gehalten und sicher am Eimer befestigbar sind.

Dabei können bzw. sollten im Übrigen die zwei verzweigten Befestigungsbandabschnitte jedes Befestigungsbands vorteilhaft eine unterschiedliche Länge aufweisen, so dass sich die Einlassöffnung des Filtersacks beim Kippen des Eimers (durch den vom Wasser ausgeübten Wasserdruck) geeignet aufweiten kann.

In besonders zweckmäßiger Weise kann der gesamte Filter einschließlich Filterelement und Haltestruktur (sowie einschließlich etwaiger Verstärkungsbänder oder Wandungen, des zum Vernähen verwendeten Garns und eines etwaigen Klettverschlusses) aus einem einzigen Material, insbesondere aus einem Polyamid, insbesondere aus Polyamid 6.6, hergestellt sein. In diesem Fall kann nämlich der gesamte Filter nach Ende seiner Lebenszeit in umweltschonender Weise einfach recycelt werden.

Bei allen vorstehend diskutierten Filtervarianten kann vorgesehen sein, dass das Filterelement durch ein Filtergewebe, insbesondere ein Kunststoffsiebgewebe, mit einer mittleren Maschenweite von 5 µm - 200 µm, bevorzugt von 20 - 100 µm oder von 20 - 80 µm, gebildet ist. Ein Filtersack, wie vorstehend beschrieben, kann vorteilhaft großflächig aus einem solchen Filtergewebe hergestellt sein, ggfs. mit randseitigen Verstärkungsbändern aus dem gleichen oder einem unterschiedlichen Material.

Für das Kunststoffsiebgewebe wird bevorzugt auf ein thermofixiertes Polyamid, insbesondere Polyamid 6.6 (PA 6.6), zurückgegriffen. Hierdurch lässt sich insbesondere eine Dauertemperaturbeständigkeit von 100°C (naß) erzielen, die für den vorliegenden Zweck bestens geeignet ist. Selbstverständlich können im Rahmen der vorliegenden Erfindung jedoch auch andere Materialien Verwendung finden, sofern diese bei üblichen Umgebungsbedingen hinreichend stabil sind.

Ferner ist die Verwendung eines monofilen Gewebes von Vorteil, welches im Übrigen einlagig verwendet werden kann. Als für die vorliegende Erfindung besonders geeignet erwiesen hat sich Verwendung eines einlagigen, monofilen Siebgewebes aus PA 6.6 mit einer Gewebedicke von ca. 80 pm, einer (mittleren) Maschenweite von Kette und Schuß von jeweils 50 µm mit einer Toleranz von nur +/- 10% und einer offenen Siebfläche von 27%.

Schließlich betrifft die vorliegende Erfindung noch ein Set aus einem Eimer und einem daran befestigbaren Filter der erfindungsgemäßen Art.

Nachfolgend wird die vorliegende Erfindung anhand der Zeichnung näher erläutert. Dabei zeigen
- Fig. 1 - 6: ein erstes, nicht erfindungsgemäßes Ausführungsbeispiel eines Filters mit einer Haltestruktur, der als Ausgießfilter an einem Eimer befestigbar ist und
- Fig. 7 - 10: ein zweites Ausführungsbeispiel eines erfindungsgemäßen Filters, teils im Set mit einem Eimer, in fotorealistischer und schematischer Darstellung.

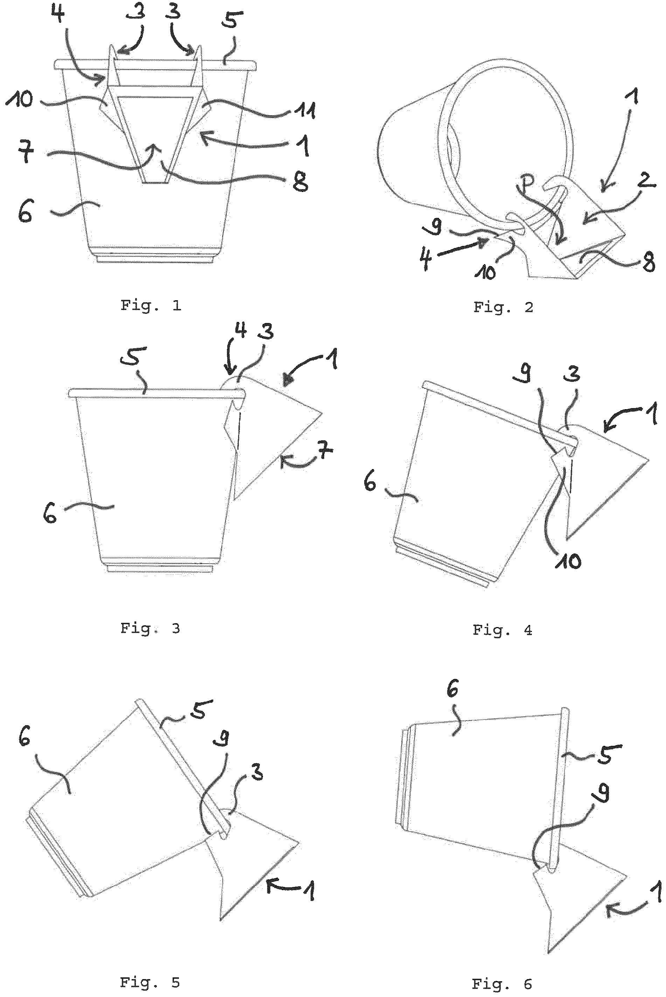

Die Fig. 1 - 6 zeigen in verschiedenen Perspektiven und in verschiedenen Orientierungen ein erstes Ausführungsbeispiel eines (nicht erfindungsgemäßen) Filters 1 mit einer oberseitig an dem Filter 1 vorgesehenen Eintrittsöffnung 2 für zu filterndes Schmutzwasser, welcher eine (bevorzugt) zwei Halteklauen 3 aufweisende Haltestruktur 4 aufweist, mit welchen der Filter 1 am oberen Rand 5 eines (geeignet bemessenen) Eimers 6 befestigbar bzw. abstützbar ist. Bei diesem Filter 1, der als Ausgießfilter für aus dem Eimer 6 auszuleerendes Schmutzwasser dient, ist die Eintrittsöffnung 2 rechteckig ausgestaltet. Das aus dem gekippten Eimer 6 gemäß Pfeil P aus Fig. 2 auslaufende Wasser tritt durch die obere Eintrittsöffnung 2 in den Filter 1 ein und durch das in einer bis zum unteren Rand des Filters 1 reichenden Seitenfläche 7 vorgesehene Filterelement 8 wieder aus dem Filter aus.

Der Filter 1 kann aus einem dünnwandigen Material - z.B. Kunststoff - bestehen, wobei in einer Aussparung der dem Eimer 6 abgewandten Seite 7 des Filters 1 das aus einem Filtergewebe mit geeignet geringer Maschenweite bestehende Filterelement 8 vorgesehen ist. Das Filterelement 8 ist vorliegend durch ein großflächiges Filtergewebe aus einem thermofixierten Kunststoff(sieb)gewebe aus Polyamid 6.6 mit einer mittleren Maschenweite von z.B. 50 µm gebildet.

Die den Eimer 6 mit an seinem oberen Rand 5 aufgehängtem Filter 1 in einer Seitenansicht zeigenden Fig. -3 - 6 veranschaulichen, dass die gegebene Haltestruktur 4 so beschaffen ist, dass der Filter 1 derart pendelnd an dem Eimer 6 befestigt ist, dass der Filter 1 unabhängig von der jeweiligen Kipplage des Eimers 6 eine im Wesentlichen gleichbleibende Orientierung im Raum einnimmt. Die an dem Filter 1 unterhalb der Halteklauen 3 vorgesehenen Anschläge 9 verhindern zuverlässig ein Abrutschen des Filters 1 von dem Eimer 6, indem sie bei starker Kipplage des Eimers 6 an dem vorstehenden Rand 5 des Eimers 6 anschlagen.

Zwei links- und rechtsseitig an dem Filter 1 vorgesehene Flügelabschnitte 10, 11 aus einem flexiblen Material, welche bei senkrecht stehendem Eimer 6 dem Eimer 6 unter Vorspannung anliegen und an welchen auch die Anschlagselemente 9 ausgebildet sind, sorgen dafür, dass sich der freie Abstand zwischen den Halteklauen 3 und den Anschlagselementen 9 verringert, wenn sich der Filter 1 infolge seiner pendelnden Aufhängung beim Verkippen des Eimers 6 verschwenkt. Hierdurch wird der Filter 1 stets zuverlässig am Eimer 6 gehalten. Durch seitliches Auseinanderziehen der Flügelabschnitte 10, 11 vergrößert sich der Abstand zwischen diesen und den Haltklauen 15, womit der Filter 12 einfach vom Eimer 14 abgenommen werden kann.

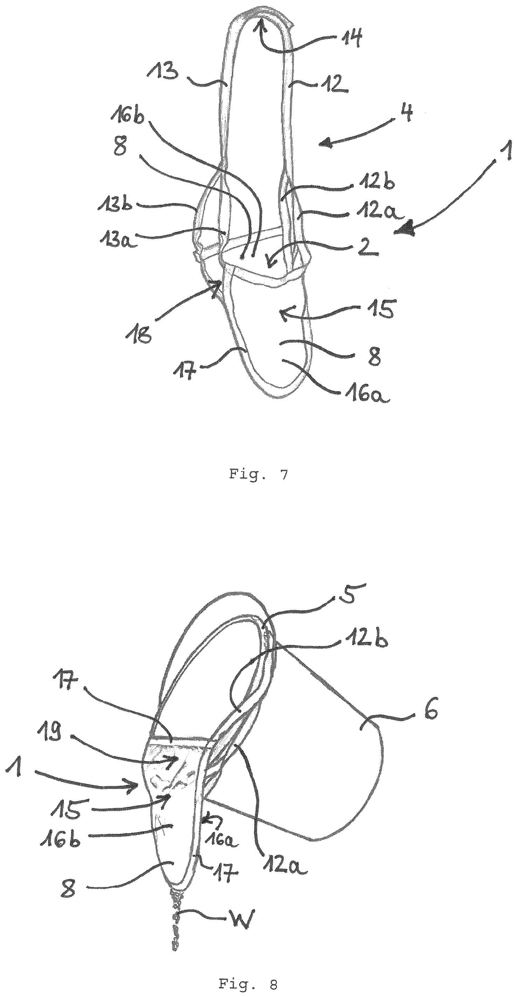

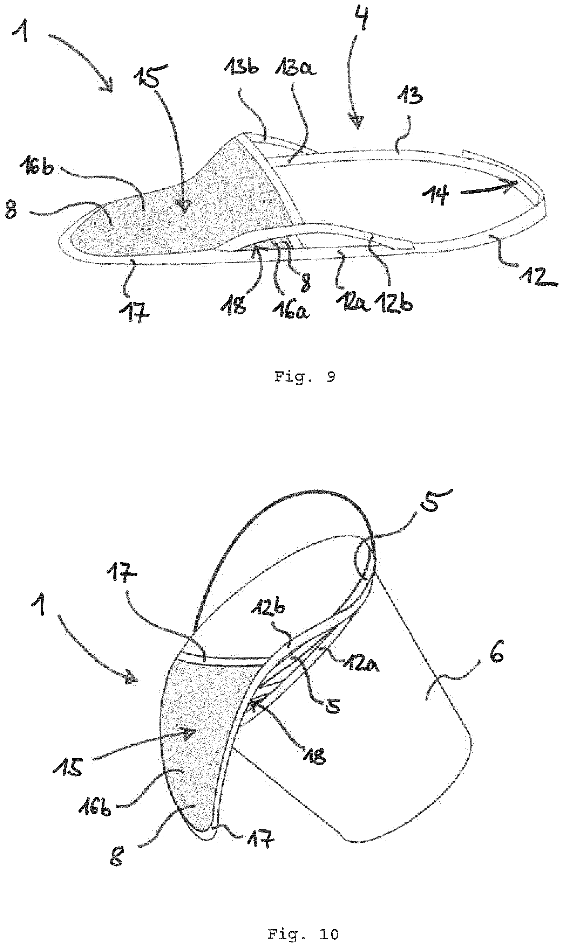

Die Fig. 7 - 10 veranschaulichen schließlich noch in schematischer Darstellung ein Ausführungsbeispiel eines erfindungsgemäßen Filters 1, der am oberen Rand 5 eines in seinen Abmessungen hierzu korrespondierenden Eimers 6 derart einhängbar bzw. befestigbar ist, dass er außen am Eimer 6 hängend (vgl. Fig. 8 und 10) im erfindungsgemäßen Sinne als Ausgießfilter zum Filtern des beim Kippen des Eimers 6 aus dem Eimer 5 auslaufenden Schmutzwassers dient.

Dieser Filter 1 weist als Haltestruktur 4 zwei Befestigungsbänder 12, 13 auf, die zur Befestigung des Filters 1 an dem Eimer 6 in dessen oberen bzw. obersten Randbereich links und rechtsseitig (typischerweise direkt unterhalb eines am Eimer 6 außen hervorstehenden Rands 5) um den Eimer 6 herumführbar und auf der dem Filter 1 gegenüberliegenden Eimerseite im Bereich ihrer freien Enden mittels eines Klettverschlusses 14 miteinander verbindbar sind. Bei unter leichter Zugspannung erfolgender Verbindung der beiden Befestigungsbänder 12, 13 lässt sich eine für den gewünschten Zweck hinreichend stabile Befestigung des Filters 1 am Eimer 6 erzielen.

Ferner weist der in den Fig. 7 - 10 dargestellte Filter 1 einen Filtersack 15 auf, in den das zu filternde Wasser durch eine Einlassöffnung 2 einfließen kann. Der Filtersack 15 ist im gegebenen Beispiel aus zwei Lagen 16a, 16b eines als großflächiges Filterelement 8 dienenden Filtergewebes hergestellt, wobei die beiden den Filtersack 15 zu verschiedenen Seiten begrenzenden Lagen 16a, 16b jeweils in ihrem Randbereich mit einem Verstärkungsband 17 verstärkt sind.

Die beiden Lagen 16a, 16b aus Filtergewebe eignen sich im erfindungsgemäßen Sinne zum Zurückhalten von Mikroplastikpartikeln oder -fasern mit Längen/Durchmessern von ca. 200 pm, können hierfür beispielsweise aus den weiter oben bereits genannten Materialien hergestellt sein und sind randseitig im Bereich des (jeweiligen) Verstärkungsbands 17 miteinander verbunden bzw. vernäht.

Der Nähgarn, die Verstärkungsbänder 17, die - im gegebenen Beispiel als einstückige Fortsetzung der Verstärkungsbänder 17 ausgeführten - Befestigungsbänder 12, 13 sowie der Klettverschluss 14 können dabei aus dem gleichen Material wie das Filtergewebe hergestellt sein.

In den Fig. 7 und 9 ist gut zu erkennen, dass der Filtersack 15 im Bereich der Einlassöffnung 2 auf zwei gegenüberliegenden Seiten einen V-förmigen bzw. V-förmig aufspreizbaren Einschnitt 18 aufweist, so dass der obere Rand 5 des Eimers 6 bei bestimmungsgemäßer Befestigung des Filters 1 an dem Eimer 6 im Bereich der Einschnitte 18 zumindest teilweise zwischen die beiden Lagen 16a, 16b (bzw. zwischen die gegenüberliegenden Randbereiche) des Filtersacks 15 eindringen kann. Hierdurch ist die unmittelbar außen dem Eimer zugewandte Lage 16a des Filtersacks 15 (bis zu ihrem obersten Randbereich) unterhalb des Eimerrands 5 angeordnet, während der obere Randabschnitt 19 (vgl. Fig. 8) der gegenüberliegenden Lage 16b des Filtersacks 15 bis über den Eimerrand hinausreichen kann, so dass das im Eimer 6 befindliche Schmutzwasser beim Kippen des Eimers 6 weitestgehend verlustfrei durch die zwischen den beiden Lagen 167a, 16b befindliche Einlassöffnung 2 von oben in den Filter 1 einfließen kann.

Schmutzpartikel und insbesondere Mikrokunststoffpartikel- und Fasern werden beim Durchlauf des Wassers durch den Filtersack 15 zuverlässig im Filtersack 15 zurückgehalten, sofern deren Durchmesser bzw. Längen größer als die Maschenweite des verwendeten Filtergewebes ist.

In den Fig. 7 - 10 ist schließlich noch gut zu erkennen, dass sich jedes Befestigungsband 12, 13 ausgehend von seinem freien Ende (im Bereich des Klettverschlusses) in Richtung zum Filtersack 15 hin in zwei Befestigungsbandabschnitte 12a, 12b bzw. 13a, 13b verzweigt, wobei die zwei Befestigungsbandabschnitte 12a, 12b bzw. 13a, 13b jedes Befestigungsbands 12, 13 an einem unterschiedlichen Schenkel eines V-förmigen Einschnitts des Filtersacks 15 ansetzen bzw. ab dort als Verstärkungsband 17 für die beiden Lagen 16a, 16b des den Filtersack 15 bildenden Filtergewebes fortgeführt sind. In Fig. 9 ist gut zu erkennen, dass die beiden verzweigten Befestigungsbandabschnitte 12a, 12b bzw. 13a, 13b jedes Befestigungsbands (12, 13) eine unterschiedliche Länge haben.

Fig. 8 zeigt schließlich noch das beim Kippen des Eimers 6 aus dem Filtersack 15 unterseitig austretende, gefilterte Wasser W.

## Patentansprüche

1. Filter (1) zur Filterung von Schmutzwasser mit einer bei bestimmungsgemäßem Gebrauch des Filters (1) oberseitig vorgesehenen Einlassöffnung (2) für das Schmutzwasser und einem Filterelement (8), durch welches das durch den Filter (1) hindurchlaufende Wasser gefiltert wird,
wobei das Filterelement (8) zur Zurückhaltung von Mikrokunststoffpartikeln oder -fasern mit Durchmessern oder Längen von 200 µm ausgebildet ist und
wobei der Filter (1) eine Haltestruktur (4) aufweist, mit welcher der Filter (1) am oberen Rand (5) eines in seinen Abmessungen hierzu korrespondierenden Eimers (6) derart befestigbar ist, dass der Filter (1) außen am Eimer (6) hängend als Ausgießfilter zum Filtern des beim Kippen des Eimers (6) aus dem Eimer (6) auslaufenden Schmutzwassers dienen kann,
wobei die Haltestruktur (4) des Filters (1) durch wenigstens ein Befestigungsband (12, 13) gebildet wird, mit welchem der Filter (1) im Bereich des oberen Rands (5) des Eimers (6) befestigbar ist,
wobei der Filter (1) einen mit der Einlassöffnung (2) für das zu filternde Wasser versehenen Filtersack (15) aufweist, und
wobei der Filtersack (15) im Bereich der Einlassöffnung (2) auf zwei gegenüberliegenden Seiten einen V-förmigen oder V-förmig aufspreizbaren Einschnitt (18) aufweist, in welchen bei bestimmungsgemäßer Befestigung des Filters (1) an einem Eimer (6) der Rand (5) des Eimers (6) zumindest teilweise eindringen kann.

2. Filter (1) nach Anspruch 1,
**dadurch gekennzeichnet, dass** der der Filter (1) mit dem wenigstens einen Befestigungsband (12, 13) im Bereich des oberen Rands (5) des Eimers (6) befestigbar ist, indem das wenigstens eine Befestigungsband (12, 13) am oberen Rand (5) des Eimers (6) um diesen herumgeführt und dort geeignet fixiert wird.

3. Filter (1) nach Anspruch 1 oder 2,
**dadurch gekennzeichnet,**
**dass** das wenigstens eine Befestigungsband (12, 13) einen Klettverschluss (14) aufweist.

4. Filter (1) nach einem der Ansprüche 1 - 3,
**dadurch gekennzeichnet,**
**dass** das wenigstens eine Befestigungsband (23, 13) und/oder der Klettverschluss (14) derart bemessen und/oder angeordnet sind, dass der Filter (1) innerhalb vorgegebener Grenzen zur Befestigung an verschieden großen Eimern (6) und/oder an Eimern (6) mit unterschiedlicher Querschnittsgeometrie geeignet ist.

5. Filter (1) nach Anspruch 1,
**dadurch gekennzeichnet,**
**dass** der Filtersack (1) aus zwei randseitig miteinander verbundenen, insbesondere unter Zuhilfenahme von Verstärkungsbändern (17) miteinander vernähten Lagen (16a, 16b) hergestellt ist, von denen wenigstens eine erste Lage (16a, 16b) zumindest bereichsweise als Filterelement (8) fungiert.

6. Filter (1) nach Anspruch 1 oder Anspruch 5,
**dadurch gekennzeichnet,**
**dass** alle Randbereiche des Filtersacks (15) mit Verstärkungsbändern (17) verstärkt sind.

7. Filter (1) nach Anspruch 1,
**dadurch gekennzeichnet,**
**dass** zwei Befestigungsbänder (12, 13) vorgesehen sind, von denen jedes in einen ersten und zweiten Befestigungsbandabschnitt (12a, 12b; 13a, 13b) verzweigt ist, wobei die zwei Befestigungsbandabschnitte (12a, 12b; 13a, 13b) jedes Befestigungsbands (12, 13) an einem unterschiedlichen Schenkel des V-förmigen Einschnitts (18) des Filtersacks (15) ansetzen.

8. Filter (1) nach Anspruch 7,
**dadurch gekennzeichnet,**
**dass** die zwei verzweigten Befestigungsbandabschnitte (12a, 12b; 13a, 13b) jedes Befestigungsbands (12, 13) eine unterschiedliche Länge aufweisen.

9. Filter (1) nach einem der vorangehenden Ansprüche,
**dadurch gekennzeichnet,**
**dass** der gesamte Filter (1) einschließlich Filterelement (8) und Haltestruktur (4) aus einem einzigen Material, insbesondere aus einem Polyamid, hergestellt ist.

10. Filter (1) nach einem der vorangehenden Ansprüche,
**dadurch gekennzeichnet,**
**dass** das Filterelement (9) durch ein Filtergewebe, insbesondere ein thermofixiertes Kunststoffsiebgewebe, mit einer mittleren Maschenweite von 5 µm - 200 µm, bevorzugt von 20 - 100 pm, gebildet ist.

11. Set aus einem Eimer (6) und einem daran befestigbaren Filter (1) nach einem der vorangehenden Patentansprüche.

## Claims

1. A filter (1) for filtering dirty water, with an inlet opening (2) for the dirty water, provided on the upper side for use of the filter (1) as intended, and with a filter element (8), by which the water passing through the filter (1) is filtered, wherein:
the filter element (8) is designed for holding back microplastic particles or fibers having diameters or lengths of 200 µm and
wherein the filter (1) has a holding structure (4), with which the filter (1) can be fastened on the upper rim (5) of a bucket (6) having dimensions corresponding to it, in such a way that the filter (1), hanging on the outside of the bucket (6), is able to function as a pouring filter for filtering the dirty water running out of the bucket (6) when the bucket (6) is tipped,
wherein the holding structure (4) of the filter (1) is formed by at least one fastening tape (12, 13), with which the filter (1) can be fastened in the region of the upper rim (5) of the bucket (6),
wherein the filter (1) has a filter bag (15) equipped with the inlet opening (2) for the water to be filtered, and
wherein the filter bag (15) has a notch (18) that is V-shaped or can be spread apart in V-shaped manner in the region of the inlet opening (2) on two opposite sides, in which notch the rim (5) of the bucket (6) is able to penetrate at least partly when the filter (1) is fastened as intended on a bucket (6).

2. The filter (1) of claim 1,
**characterized in that** the filter (1) can be fastened in the region of the upper rim (5) of the bucket (6) with the at least one fastening tape (12, 13), the at least one fastening tape (12, 13) encircling the upper rim (5) of the bucket (6) and being suitably fixed there.

3. The filter (1) of claims 1 or 2
**characterized in that** the at least one fastening tape (12, 13) has a hook-and-loop fastener (14).

4. The filter (1) of one of claims 1 to 3,
**characterized in that** the at least one fastening tape (23, 13) and/or the hook- and-loop fastener (14) are dimensioned and/or disposed in such a way that the filter (1) is suitable, within given limits, for fastening on buckets (6) of various sizes and/or on buckets (6) with different cross-sectional geometry.

5. The filter (1) of claim 1,
**characterized in that** the filter bag (1) is made from two layers (16a, 16b) joined to one another peripherally, especially stitched to one another by means of reinforcing tapes (17), of which at least one first layer (16a, 16b) functions at least in some regions as a filter element (8).

6. The filter (1) of claim 1 or claim 5,
**characterized in that** all rim regions of the filter bag (15) are reinforced with reinforcing tapes (17).

7. The filter (1) of claim 1,
**characterized in that** two fastening tapes (12, 13) are provided, each of which is branched into a first and second fastening tape portion (12a, 12b; 13a, 13b), wherein the two fastening tape portions (12a, 12b; 13a, 13b) of each fastening tape (12, 13) are positioned on different limbs of the V-shaped notch (18) of the filter bag (15).

8. The filter (1) of claim 7,
**characterized in that** the two branched fastening tape portions (12a, 12b; 13a, 13b) of each fastening tape (12, 13) have different lengths.

9. The filter (1) of one of the preceding claims,
**characterized in that** the entire filter (1) including filter element (8) and holding structure (4) is made from a single material, especially from a polyamide.

10. The filter (1) of one of the preceding claims,
**characterized in that** the filter element (9) is formed by a filter fabric, especially a thermoset plastic screen fabric, having a mean mesh width of 5 µm - 200 µm, preferably of 20 - 100 µm.

11. A kit comprising a bucket (6) and a filter (1) fastened thereon according to one of the preceding claims.

## Revendications

1. Filtre (1), destiné à filtrer de l'eau sale, pourvu d'une ouverture d'entrée (2) pour l'eau sale, prévue sur la face supérieure lors d'une utilisation conforme du filtre et d'un élément filtrant (8), par lequel l'eau s'écoulant à travers le filtre (1) est filtrée,
l'élément filtrant (8) étant conçu pour retenir des microparticules ou des fibres de matière plastique présentant des diamètres ou des longueurs de 200 um et
le filtre (1) comportant une structure de maintien (4), à l'aide de laquelle le filtre (1) est susceptible d'être fixé sur le bord supérieur (5) d'un seau (6) dont les dimensions correspondent à cet effet, de telle sorte que le filtre (1) accroché à l'extérieur sur le seau (6) puisse faire office de filtre verseur pour filtrer l'eau sale s'écoulant hors du seau (6) lors d'un basculement du seau (6),
la structure de maintien (4) du filtre (1) étant constituée d'au moins une bande de fixation (12, 13), à l'aide de laquelle le filtre (1) est susceptible d'être fixé dans la zone du bord (5) supérieur du seau (6),
le filtre (1) comportant un sac filtrant (15) muni de l'ouverture d'entrée (2) pour l'eau qui doit être filtrée et
le sac filtrant (15) comportant dans la zone de l'ouverture d'entrée (2) sur deux côtés opposés une entaille (18) en forme de V ou expansible en forme de V, dans laquelle, lors d'une fixation conforme du filtre (1) sur un seau (6), le bord (5) du seau (6) peut pénétrer au moins partiellement.

2. Filtre (1) selon la revendication 1,
**caractérisé en ce que** le filtre (1) est susceptible d'être fixé avec l'au moins bande de fixation (12, 13) dans la zone du bord (5) supérieur du seau (6) **en ce que** l'on guide l'au moins une bande de fixation (12, 13) sur le bord (5) du seau (6) autour de celui-ci et on l'y fixe de manière adaptée.

3. Filtre (1) selon la revendication 1 ou 2,
**caractérisé**
**en ce que** l'au moins une bande de fixation (12, 13) comporte une fermeture autoagrippante (14).

4. Filtre (1) selon l'une quelconque des revendications 1 à 3,
**caractérisé**
**en ce que** l'au moins une bande de fixation (23, 13) et / ou la fermeture autoagrippante (14) sont dimensionnées et / ou placées de telle sorte que le filtre (1) soit adapté à la fixation dans des limites prédéfinies sur des seaux (6) de différentes tailles et / ou sur des seaux (6) de sections transversales de différentes géométries.

5. Filtre (1) selon la revendication 1,
**caractérisé**
**en ce que** le sac filtrant (1) est fabriqué à partir de couches (16a, 16b) assemblées les unes aux autres sur leur bord, notamment cousues les unes avec les autres en s'aidant notamment de bandes de renfort (17), dont au moins une première couche (16a, 16b) assure au moins par endroits la fonction d'élément filtrant (8).

6. Filtre (1) selon la revendication 1 ou la revendication 5,
**caractérisé**
**en ce que** toutes les zones du bord du sac filtrant (15) sont renforcées avec des bandes de renfort (17).

7. Filtre (1) selon la revendication 1,
**caractérisé**
**en ce que** deux bandes de fixation (12, 13) sont prévues, dont chacune se ramifie en un premier et un deuxième segments (12a, 12b ; 13a, 13b) de bande de fixation, les deux segments (12a, 12b ; 13a, 13b) de bande de fixation de chaque bande de fixation (12, 13) s'appliquant sur une branche différente de l'entaille (18) en forme de V du sac filtrant (15).

8. Filtre (1) selon la revendication 7,
**caractérisé**
**en ce que** les deux segments (12a, 12b; 13a, 13b) de bande de fixation ramifiés de chaque bande de fixation (12, 13) présentent une longueur différente.

9. Filtre (1) selon l'une quelconque des revendications précédentes,
**caractérisé**
**en ce que** l'ensemble du filtre (1), y compris l'élément filtrant (8) et la structure de maintien (4) est fabriqué en une unique matière, notamment en un polyamide.

10. Filtre (1) selon l'une quelconque des revendications précédentes,
**caractérisé**
**en ce que** l'élément filtrant (9) est constitué d'un tissu filtrant, notamment d'un tissu tamisant en matière plastique thermofixé, d'une ouverture de maille moyenne de 5 µm à 200 µm, de préférence de 20 à 100 µm.

11. Kit, constitué d'un seau (6) et d'un filtre (1) selon l'une quelconque des revendications précédentes, susceptible d'être fixé sur celui-ci.
